# EUROPEAN PATENT APPLICATION

(11) **EP 4 763 336 A1**
(43) Date of publication of application: **24.06.2026**
(21) Application number: 24221496.3
(22) Date of filing: 19.12.2024
(51) Int. Cl.: B01L 3/02, G01N 35/10

(54) **APPARATUS FOR MEASURING AN AMOUNT OF ANALYTE IN A BIOLOGICAL SAMPLE**

(71) Applicant: Radiometer Medical ApS, 2700 Brønshøj (DK)
(72) Inventor: HANSEN, Ole Kudsk, 2700 Brønshøj (DK); ROHDE, Jonas, 2700 Brønshøj (DK)
(74) Representative: Guardian IP Consulting I/S

(57) **Abstract**

Disclosed herein are embodiments of an apparatus for measuring an amount of analyte in a biological sample, the apparatus comprising a pipetting unit for transferring an aliquot of a received biological sample into a sample receptacle for analysis of the aliquot of the received biological sample, wherein the pipetting unit comprises a sample transfer needle, the needle comprising a circumferential wall, the circumferential wall defining an elongated lumen surrounded by the circumferential wall.

## Description

### TECHNICAL FIELD

The present invention relates to various aspects of an apparatus for measuring an amount of analyte in a biological sample. In particular, various aspects disclosed herein relate to such an apparatus and to a method for operating such an apparatus.

### BACKGROUND

Apparatus for measuring amounts of analytes in biological samples, in particular in blood samples, by means of respective detectors or sensors are widely used in the medical and clinical field. Such apparatus are often simply referred to as analyzer units or simply analyzers.

In addition to general requirements in respect of accuracy, precision, and reliability, apparatus for clinical applications are often subject to further critical constraints. Such constraints include a need for low manufacturing costs and/or low operating costs, low down times, ease of use, efficiency of use, in particular reduced need for sample preparation, etc.

Many apparatus perform measurements on biological samples that comprise blood plasma or blood with all its components, in particular including the plasma as well as the red blood cells. The latter has the advantage that the need for pre-processing the blood sample prior to performing the desired measurements is kept to a minimum, if not eliminated altogether. Generally, a blood sample including both plasma and red blood cells is referred to as a "whole blood" sample. Measurements performed on whole blood are particularly useful in the context of point-of-care blood analysis. However, an analyzer configured to perform measurements on whole blood samples requires an increased focus on cleaning the parts of the analyzer that are in contact with the whole blood in order to avoid carry over contamination between samples.

In many apparatus, a blood sample to be analyzed is dispensed in a sample cup or other sample receptacle that includes one or more binding partners of the analyte which is desired to be detected, so that the analytes present in the blood sample are allowed to interact with the binding partners included in the cup. Some analyzer units may be operable to analyze blood samples for a variety of analytes. To this end, the analyzer unit may perform a variety of assays targeted at respective analytes. The different assays may thus involve different binding partners.

Analyzers typically comprise a pipetting unit for transferring an aliquot of a received biological sample into a sample receptacle for analysis of the aliquot of the received biological sample.

It is generally desirable to reduce the risk of contamination of a sample to be analyzed, e.g. by material from a previously analyzed sample. Such carry-over between samples may lead to falsely elevated results.

Use of single-use pipetting needles or pipette tips may reduce the risk of carry over, but they increase the operational costs and reduce the efficiency of use of the analyzer.

Accordingly, despite previous efforts it remains desirable to provide an apparatus and/or a method of operating such an apparatus that solve one or more of the above problems and/or that have other benefits, or that at least provide an alternative to existing solutions.

### SUMMARY

On this background, disclosed herein are various aspects and embodiments of an apparatus for measuring an amount of analyte in a biological sample, the apparatus comprising a pipetting unit for transferring an aliquot of a received biological sample into a sample receptacle for analysis of the aliquot of the received biological sample, wherein the pipetting unit comprises a tubular sample transfer needle, the sample transfer needle comprising a circumferential wall, the circumferential wall defining an elongated lumen surrounded by the circumferential wall.

According to one aspect, at least a part of the circumferential wall is made from a metal alloy comprising between 20% and 50% cobalt, such as between 25% and 45% cobalt, such as between 25% and 40%, such as between 30% or 40%, or between 29% and 39% cobalt. Preferably, the entire circumferential wall is made from a metal alloy comprising between 20% and 50% cobalt, such as between 25% and 45% cobalt, such as between 25% and 40%, such as between 30% or 40%, or between 29% and 39% cobalt.

The inventors have realized that the use of cobalt-enriched metal for the sample transfer needle allows for the provision of a smooth surface, even without the need of a coating, thus making the sample transfer needle easier to clean and reducing unspecific binding to the needle surface.

The inventors have further realized that the provision of a sample transfer needle made from cobalt-enriched metal provides a needle having a long lifetime with high resistance to corrosion, even when the sample transfer needle is frequently brought in contact with a saline solution used as buffer liquid for the analysis of blood samples.

In some embodiments, the metal alloy comprises less than 2% Fe, such as less than 1% Fe, or only trace amounts of Fe, thereby further reducing the risk of corrosion.

In some embodiments, the metal alloy further comprises chromium, nickel and molybdenum. In some embodiments, the metal alloy comprises between 19% and 21% of chromium, between 33% and 37% of nickel and between 9% and 11% of molybdenum. Accordingly, in some embodiments, the metal alloy comprises chromium and molybdenum at amounts that cause the metal alloy to have a pitting resistance equivalent number (PREN) of at least 40, such as at least 45, such as at least 50, such as between 50 and 57, thereby providing a high resistance to corrosion. The term "pitting resistance equivalent number (PREN)" as used herein describes the alloys resistance to localized pitting corrosion. In general, the higher PREN-value, the more resistant is the alloy to localized corrosion by chloride. The pitting resistance equivalent number can be calculated using the formula: PREN = %Cr + 3.3 * (%Mo + 0.5 * %W) + 16*%N.

The circumferential wall is an inner circumferential wall, i.e. the circumferential wall has an inwardly facing tubular surface surrounding the lumen. In some embodiments, the surface having a Ra value between 0.1 µm and 0.3 µm. A smooth surface inside the needle helps prevent proteins from adhering to the surface. The smoothness of the metal alloy surface avoids the need for coating the inner needle surface, thereby providing a durable and easy to clean surface. Accordingly, in some embodiments, the inwardly facing tubular surface is an uncoated surface exposing said metal alloy to liquid passing through said lumen.

According to a second general aspect disclosed herein, at least a part of the circumferential wall is made from a metal alloy and has an inwardly facing tubular surface surrounding the lumen, the surface exposing the metal alloy and having a Ra value of between 0.1 µm and 0.3 µm.

Generally, in some embodiments, the sample receptacle includes one or more binding partners of the analyte so that the analyte present in the biological sample is allowed to interact with the one or more binding partners. The biological sample may be a blood sample, in particular a whole blood sample. The apparatus may be configured to dispense a buffer liquid into the receptacle to dilute the biological sample and/or to dissolve an insulating layer protecting the one or more binding partners.

The sample transfer performed by the pipetting unit may comprise aspiration of an aliquot of the received sample by the pipetting unit into the sample transfer needle. To this end, the sample transfer unit may have an open pipetting end to allow an aliquot of the received sample to be drawn into the lumen of the sample transfer needle. Generally, the aliquot may be only a portion of the received sample, less than the entire received sample. Alternatively, the aliquot may be the entire received sample.

In order to avoid contamination of samples, the surfaces exposed to the sample should be clean. Accordingly, in some embodiments, the apparatus comprises a fluid handling assembly configured to feed a rinse liquid through said lumen, thereby allowing efficient cleaning of the internal surface of the pipetting needle. The fluid handling assembly may comprise a plurality of fluid handling components such as one or more pumps, one or more valves, one or more conduits and/or the like. The fluid handling assembly may be configured to perform one or more operations of the apparatus that involve the transport of liquid, air and/or another fluid. In some embodiments, the fluid handling assembly is configured to perform one or more wash cycles after each analysis of a biological sample, thereby preparing the sample transfer needle for the analysis of a subsequent analysis and minimizing the risk of carry-over between successive samples without the need for replacing the needle or for using single-use needle tips or the like.

In some embodiments, the rinse liquid is a rinse solution, in particular an aqueous solution. The rinse liquid is preferably an alkaline liquid, in particular a liquid having a pH above 11, such as between 11 and 13, preferably between 11.5 and 12.5. To this end, the rinse liquid may comprise NaOH, LiOH and/or another source of hydroxide ions. Accordingly, the rinse liquid provides an efficient breaking of protein bindings, thereby reducing the risk of carry-over contamination. In some embodiments, the rinse liquid further comprises one or more wetting agent(s) and one or more detergent(s), preferably at least one ionic detergent and at least one nonionic detergent, thereby providing any efficient cleaning of the needle surfaces for removing any remaining unspecific binding from the sample and thus prevent carry-over between samples.

The term "wetting agent" as used herein means a chemical that can be added to a liquid to reduce its surface tension and make it more effective in spreading over and penetrating surfaces. Suitable examples include Methylcellulose, acacia, pectin, surfactant-sodium lauryl sulfate, polysorbate 80, poloxamers, Pluronics, etc., such as Dynol 604.

The term "detergent" as used herein means a water-soluble cleansing agent which combines with impurities and dirt to make them more soluble and differs from soap in not forming a scum with the salts in hard water. Detergents are typically amphiphilic molecules containing a polar hydrophilic head group attached to a long-chain hydrophobic carbon tail. Detergents can be ionic or nonionic. In ionic detergents the polar head group contains either a positive (cationic) charge or a negative (anionic) charge, whereas in nonionic detergent the polar head group is an uncharged group. Suitable examples of non-ionic detergents are Triton X-100, Tween-20, and Brij-35.

In some embodiments, the fluid handling assembly is further configured to dispense a buffer liquid, different from the rinse liquid, into the sample receptacle. The term "buffer liquid" as used herein refers to a liquid where the pH does not change significantly on dilution or if an acid or base is added at constant temperature. A buffer liquid may be a liquid including a chemical buffer capable of providing a buffer effect to the liquid. Examples of chemical buffers capable of providing a buffer effect to a liquid are HEPES, or Imidazole and/or MOPS.

In particular, the buffer liquid may comprise a saline solution. The term "saline solution" as used herein means a mixture of salt and water. In general, the salt can be any kind of water-soluble salt but typically the salt is sodium chloride and/or potassium chloride. The concentration of salt in the saline solution is typically in the area of 5% w/v or less, such as 2% w/v or less or 1% w/v or less. The saline solution may be an isotonic saline solution comprising 0.9% w/v sodium chloride.

The buffer liquid may further comprise one or more additional buffer constituents, in particular one or constituents selected from the group consisting of: a chemical buffer, a wetting agent, a detergent and an antimicrobial. The term "antimicrobial" as used herein means an active substance that kills microorganisms and prevents microbial growth. The buffer liquid may be used for a variety of purposes, e.g. one or more of the following:
- For pre-dilution of the sample to be analyzed and/or for incubation of the assay.
- For washing the sample cup to remove unbound material
- For calibration of a hematocrit measurement cell

During sample analysis, the buffer liquid may thus be used to dilute the sample in the sample receptacle and/or for washing the sample receptacle. During analysis, the buffer liquid may be dispensed into the sample receptacle, e.g. via the lumen of the sample transfer needle and/or via a separate buffer dispensing conduit. In some embodiments, the apparatus is configured to perform a wash operation of the sample receptacle after the biological sample has been added to the sample receptacle and before a measurement of an amount of analyte that has interacted with, in particular been bound to, the one or more binding partners. The biological sample may be a blood sample, in particular a whole-blood sample. In some embodiments the analyte is an antigen.

Alternatively or in addition to the use of the buffer liquid during the sample analysis, in some embodiments, the buffer liquid may be used for washing the sample transfer needle. To this end, the fluid handling assembly may be configured to feed buffer liquid through the lumen of the sample transfer needle as part of the wash process for cleaning the sample transfer needle between the analysis of successive samples. In some embodiments, the fluid handling assembly is configured to selectively, in particular alternatingly, feed the rinse liquid and the buffer liquid through the lumen. The buffer liquid may thus serve to flush remainders of the rinse liquid from the lumen of the sample transfer needle in preparation of the needle for the processing of a subsequent sample after application of the rinse liquid, thereby avoiding remainders of the rinse liquid to affect the subsequent sample analysis.

In some embodiments, the sample transfer needle has a pipetting end and a rear end, opposite the pipetting end, and the fluid handling assembly is in fluid communication with the rear end and comprises a liquid selector valve for selectively feeding rinse liquid or buffer liquid through the lumen, thus facilitating the selective feeding of rinse liquid and buffer liquid through the needle in an efficient manner. In some embodiments, the fluid handling assembly further comprises a valve or other form of air supply unit for selectively feeding filtered air through the lumen during the cleaning process, thereby further increasing the cleaning efficiency.

In some embodiments, the fluid handling assembly is configured to perform a sequence of wash cycles, the sequence comprising one or more pre-rinse cycles followed by one or more rinse cycles. In some embodiments, the fluid handling assembly is configured, during at least one of the one or more pre-rinse cycles, to feed buffer liquid through the lumen, and wherein the fluid handling assembly is configured, during at least one of the one or more rinse cycles, to feed rinse liquid through the lumen. In some embodiments, the pre-rinse cycle may be omitted or performed with rinse liquid. In some embodiments, the sequence of wash cycles may comprise one or more rinse cycles followed by one or more flush cycles, wherein the fluid handling assembly is configured, during at least one of the one or more rinse cycles, to feed rinse liquid through the lumen, and wherein the fluid handling assembly is configured, during at least one of the one or more flush cycles, to feed buffer liquid through the lumen. Accordingly, a wash process is provided that efficiently cleans the sample transfer needle and reduces the risk for sample contamination by carry-over or otherwise. Moreover, the risk of sample contamination by the rinse liquid is reduced.

The present disclosure relates to different aspects including the apparatus described above and in the following, corresponding systems, methods, apparatus, and/or products, each yielding one or more of the benefits and advantages described in connection with one or more of the other aspects, and each having one or more embodiments corresponding to the embodiments described in connection with one or more of the other aspects and/or disclosed in the appended claims.

In particular, according to one aspect, disclosed herein are embodiments of a method of operating an apparatus as described above and in the following. Embodiments of the method comprise feeding a rinse liquid through the lumen of the sample transfer needle, in particular feeding the rinse liquid through the lumen between analysis of consecutive samples. The rinse liquid may be as described above and in the following.

In some embodiments, the method further comprises dispensing a buffer liquid, different from the rinse liquid, into the sample receptacle. The buffer liquid may comprise a saline solution, e.g. as described above and in the following. The method may comprise dispensing the buffer liquid into the sample receptacle during the analysis process, in particular in preparation for performing one or more measurements.

In some embodiments, the method comprises feeding the buffer liquid through the lumen of the sample transfer needle during a wash process for cleaning the sample transfer needle. In some embodiments, the method comprises selectively, in particular alternatingly, feeding the rinse liquid and the buffer liquid through the lumen of the sample transfer needle. Preferably, the method comprises performing one or more wash cycles for cleaning the sample transfer needle after and/or before each analysis of a biological sample.

In some embodiments, the method comprises performing a sequence of wash cycles, the sequence comprising one or more pre-rinse cycles followed by one or more rinse cycles, and wherein the method comprises:
- during at least one of the one or more pre-rinse cycles, feeding buffer liquid through the lumen, and,
- during at least one of the one or more rinse cycles, feeding rinse liquid through the lumen.

Alternatively or additionally, the sequence of wash cycles may comprise one or more rinse cycles followed by one or more flush cycles, wherein the method comprises:
- during at least one of the one or more rinse cycles, feeding rinse liquid through the lumen, and
- during at least one of the one or more flush cycles, feeding buffer liquid through the lumen.

In some embodiments, the one or more binding partners may be selected from antibodies, e.g. a set of one or more capture antibodies capable of interacting with the analyte and one or more tracer antibodies for interacting with the analyte.

As used herein, the term "capture antibody" means an antibody that is immobilized, e.g. on the inner surface of the sample cup, and that "captures" an analyte that is thereby also immobilized/bound in the sample cup, e.g. to the inner surface of the sample cup. Alternatively, the capture antibody is immobilized to a solid surface of, e.g., water insoluble particles (like polymer beads), glass beads, gold particles, and magnetic particles (e.g. polymer beads having a magnetic core or having magnetic particles dispersed therein), i.e. a solid phase that will not be removed from the cup upon washing. Thus, the capture antibody is directed against the analyte of interest as the antigen. The capture antibody may be immobilized to the surface of the measuring cell covalently or non-covalently. In one embodiment, the immobilization relies on the interaction between biotin and streptavidin. For example, the capture antibody may be biotinylated and the inner surface of the measuring cell may be coated with covalently bound streptavidin. The capture antibody is then immobilized on the inner surface of the sample cup through the interaction between biotin and streptavidin. The interaction between biotin and streptavidin is so strong that it is essentially irreversible. However, other immobilization methods are equally suitable to immobilize the capture antibody. The capture antibody is however not removed or substantially removed from the inner surface of the sample cup during the washing, incubation and drying steps of an immunoassay.

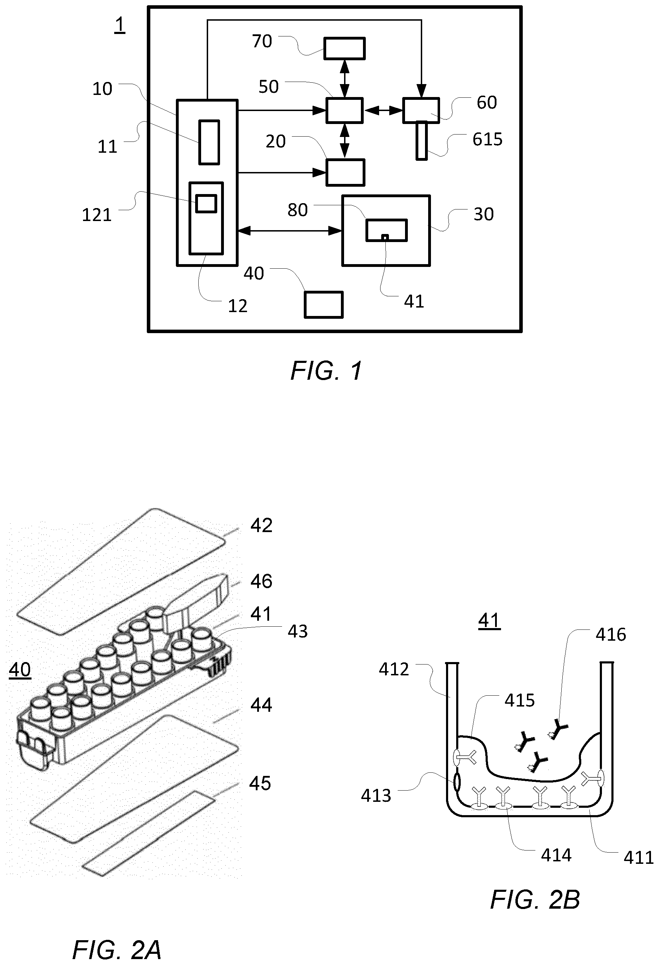

As used herein, the term "tracer antibody" refers to an antibody that is labelled with a detection label. The tracer antibody is directed against the analyte or complex of analyte and capture antibody. The label may then subsequently e.g. provide a detectable signal using an appropriate sensor, e.g. a colorimetric signal or a fluorescence signal. The label may be attached covalently or non-covalently to the tracer antibody. Examples for labels attached to the antibody include, but are not limited to, fluorescent tags such as green fluorescent protein or variants thereof, enzymatic tags such as galactosidase that catalyzes a colorimetric reaction, radioactive isotopes, small molecule fluorescent or phosphorescent dyes, other small molecule-colored dyes, nanoparticles and the like. Examples of the label in particular include, but are not limited to, lanthanide chelate labels e.g. as described in EP 0 892 927 B1 or US 9,944,657. The tracer antibody binds to the analyte forming a ternary complex between the analyte, tracer antibody and capture antibody (see Figure 1).

It will be appreciated that the term "antibody" when used herein in the context of the terms "capture antibody" and "tracer antibody" is used in the conventional sense within the field of immunoassays, i.e., for example to encompass monoclonal antibodies, polyclonal antibodies as well those fragments of antibodies that binds to a relevant epitope of the analyte (e.g. antigen), etc. Further, antibodies (or fragments thereof) may be produced in e.g. animals or in cell lines, including utilizing recombinant techniques and synthetic or semi-synthetic methodologies.

Alternatively, one, two or several or all binding partners are aptamers, like capture "capture aptamer(s)" and/or "tracer aptamer(s)", respectively. Aptamers are single stranded DNA or RNA, or synthetic version hereof (XNA, like e.g. LNA) or hybrids thereof, e.g. selected from large random sequence pools. However, antibodies as well as aptamers can be chosen such as to be able to bind to a specific analyte (target molecule).

### BRIEF DESCRIPTION OF THE DRAWINGS

Preferred embodiments of an apparatus for measuring an amount of analyte in a biological sample and of a method of operating such an apparatus will now be described in more detail. In the following description the apparatus for measuring an amount of analyte in a biological sample will more briefly be referred to as an analyzer unit or simply as an analyzer. In the following, the embodiments will be described in connection with the appended drawings, where:
FIG. 1 schematically illustrates an example of an analyzer unit.
FIG. 2A schematically illustrates an exploded view of an example of an assay cartridge for use with an embodiment of an analyser unit.
FIG. 2B schematically illustrates an example of a sample cup.
FIG. 3 shows a schematic view of a sample transfer needle assembly including a sample transfer needle.
FIG. 4 shows a schematic view of a fluid handling assembly.
FIG. 5 shows a flow diagram of an example of a needle wash process for cleaning a sample transfer needle.

### DETAILED DESCRIPTION

FIG. 1 schematically illustrates an example of an analyzer unit, generally designated 1. The analyzer unit 1 comprises a control unit 10, an analyte sensor unit 30, a cup wash unit 20, an assay cartridge 40, a cup holder 80, a fluid handling assembly 50, a pipetting unit 60, a liquid storage module 70, and a needle wash unit 90.

It will be appreciated that some embodiments of the analyzer unit may include one or more additional or alternative components, which are not explicitly shown in FIG. 1 and which are known per se in the art of analyzer units. Examples of such additional components include a sample inlet for receiving a blood sample, a sample handling system for presenting a received blood sample to the pipetting unit, further components for transporting one or more buffer liquids and/or for transporting and storing waste material, one or more motors, such as a servo motor, or another suitable actuator for causing movement of various components, one or more sensors such as temperature sensors, flow sensors, and/or the like. Examples of alternative components include alternative sample receptacles other than a cup. The analyzer unit may further comprise a suitable user interface allowing a user to interact with the analyzer unit. To this end, the user interface may include a display for displaying measurement results.

The analyte sensor unit 30 may employ a suitable measurement methodology for measuring the concentration of one or more analytes in a whole-blood sample. In particular, the analyte sensor unit may be configured to measure concentration of an analyte by use of an immunoassay as is known as such in the art. To this end, the analyte sensor unit may be a cartridge-based sensor unit, and the analyzer may be configured to receive an assay cartridge 40. The assay cartridge may comprise a plurality of sample cups. For example, during operation, the apparatus may remove a sample cup 41 from the assay cartridge 40 and place it in the cup holder 80. In preparation of the analysis, the pipetting unit 60 may use a sample transfer needle 615 to transfer an aliquot of a received blood sample into the sample cup. The analyte sensor unit 30 may then perform the desired analysis and the used sample cup may be deposited in a waste collection container or otherwise.

In some embodiments, the assays, in particular immunoassays, are based on a dry-chemistry concept and on a suitable detection method, e.g. based on non-enhanced time-resolved fluorescence (TRF) technology. In this respect, the term dry-chemistry means that the required assay-specific reagents, e.g. including tracer antibody, capture antibody and stabilizing reagents, are dry-coated into one or more assay-specific sample cups of the assay cartridge 40.

Generally, the sample cups may be prepacked into sealed cartridges 40, each cartridge containing a plurality of sample cups, e.g. 16 sample cups or another suitable number of sample cups. The cartridge may further include a desiccant in a pouch to control humidity. Each sample cup may be individually sealed in a separate chamber to improve shelf life. The cartridge may thus be a replaceable consumable of the analyzer unit. An example of an assay cartridge is shown in FIG. 2A. It will be appreciated, however, that alternative embodiments of analyzer units may perform additional or alternative types of analysis of a biological sample that involve transferring an aliquot of a sample to be analyzed using a sample transfer needle. In particular, the analyzer may use other types of sample receptacles and/or employ other types of chemical reactions for performing measurements.

Still referring to FIG. 1, in some embodiments, in addition to the sample itself, a buffer liquid is used to carry out an analysis. Moreover, the buffer liquid may be used for washing the sample cup during the analysis process. To this end, the analyzer unit may include a liquid storage module 70. The liquid storage module 70 may be provided as a replaceable onboard solution pack, which may be a closed system containing one or more buffer liquids and/or one or more rinse liquids in respective bags or in other forms of containers. The liquid storage module 70 may also have one or more receptacles for waste collection, e.g. for both waste sample cups and liquid waste. This means a user does not need to come into direct contact with the sample or any used reagents. In some embodiments, the same buffer liquid may be used both as reagent buffer during analysis and as wash buffer for performing the needle wash operation, thus simplifying the fluid handling assembly.

The analyte sensor 1 is configured to analyze a blood sample. The blood sample can be either whole blood or plasma. During normal use of the analyzer unit, e.g. during clinical use, it is often preferred to perform the measurements directly on whole-blood samples so as to reduce the time and effort needed for sample preparation prior to the measurement. The sample may be received by the analyzer unit in a sample tube, in particular a closed sample tube. The analyzer unit 1 may perform aspiration from the sample tube automatically by means of the pipetting unit 60. The pipetting unit may obtain a small amount of sample into a sample transfer needle 615 and add the obtained sample to the sample cup 41 for analysis. To this end, the analyzer unit may initially remove a sample cup 41 from the cartridge 40 and position it into a suitable cup holder 80. Alternatively, the analyzer unit may otherwise bring a fresh sample cup into an operational position relative to the analyte sensor unit 30. An example of the measurement process is described in international patent application PCT/EP2024/067713, the entire contents of which are hereby included herein by reference.

Briefly, the measurement process may comprise a washing step, following a step where the blood sample has been allowed to react with the binding partners in the sample cup 41. During the washing step, the reacted assay sample cup is washed thoroughly to remove any unbound material prior to performing a measurement step. To this end, the cup wash unit 20 may be configured to dispense buffer liquid into the sample cup and to suck waste material out of the sample cup. The fluid handling assembly 50 may comprise one or more pumps for supplying buffer liquid to the cup wash unit 20 and for withdrawing waste material from the sample cup 41 by means of the cup wash unit 20.

Between the analysis of different samples, the analyzer unit is configured to wash the sample transfer needle 615 so as to reduce the risk of carry-over contamination of samples, thereby avoiding the need for single-use needle tips or the like. The needle wash process for cleaning the sample transfer needle preferably uses a special rinse liquid different from the buffer liquid, thereby providing a more thorough cleaning. The needle wash process may also use buffer liquid in addition to the rinse liquid, as will be described in greater detail below. To this end, the fluid handling assembly 50 is fluidly connected to the pipetting unit 60 and configured to feed rinse liquid and/or buffer liquid through the sample transfer needle. To this end, the apparatus may comprise a needle wash unit 90, and the pipetting unit 60 may be configured to place the sample transfer needle 615 into the needle wash unit 90 between the processing of different blood samples, preferably before the processing of each sample.

The analyte sensor unit 30, the cup wash unit 20, the fluid handling assembly 50, and the pipetting unit 60 are communicatively coupled to the control unit 10, which controls operation of the components of the analyzer unit 1. The analyte sensor unit 30 forwards its measurement results to the control unit 10 for further processing. It will be appreciated that the analyte sensor unit may forward raw measurement signals or pre-processed measurement signals or data, such as A/D converted signals, filtered signals, amplified signals and/or otherwise preprocessed signals or data to the control unit 10. In will be appreciated that the control of the various components of the analyzer unit and the processing of the measurement results may be performed by a single processing unit or by separate processing units.

The control unit 10 may include a suitable programmed CPU 11 and a data storage device 12. The control unit 10 is configured for executing program code 121, which may be stored on the data storage device 12, to control operation of the analyzer unit. The data storage device 12 may be a hard drive, an EEPROM, a solid-state drive, or another suitable data storage device. The data storage device may have stored thereon the program code 121 and additional data. The control unit 10 may thus load the program code 121 from the data storage device 12 into the CPU 11 which may execute the loaded program code.

In particular, the program code 121 may be configured to cause the control unit 10, responsive to the obtained measurement values from the analyte sensor unit 30, to process the measurement values and present the processed measurement results to the user, e.g. via a suitable display or in another form, and/or to communicate the processed measurement results to a remote data processing system. In various embodiments of the analyzer unit, the processing of the measurement values comprises the computation of an analyte concentration based on a measurement performed on a whole-blood sample.

The control unit 10 may be configured to control the fluid handling assembly 50 and the pipetting unit 60 to perform a needle wash process for cleaning the sample transfer needle 615 before and/or after each sample analysis.

FIG. 2A schematically illustrates an exploded view of an example of an assay cartridge 40 for use with an embodiment of an analyser unit, e.g. the analyser unit of FIG. 1. The essay cartridge 40 comprises a plurality of individually sealable chambers 43, such that each chamber holds a sample cup 41. The cartridge may e.g. be sealed by an upper sealing foil 42 and a lower sealing foil 44. The cartridge may comprise a machine-readable tag 45, e.g. an RFID tag, a bar code or other form of machine-readable code. The tag may comprise one or more identifiers, e.g. a serial number, identifying the cartridge and/or being indicative of the type of binding partners included in the sample cups, i.e. the type of analyte the sample cups of the cartridge are configured to detect. The cartridge may further comprise a pouch 46 or other container accommodating a suitable desiccant.

FIG. 2B schematically illustrates an example of a sample cup 41. The sample cup 41 is an upwardly open vessel shaped and sized to accommodate a sample, in particular a blood sample. The sample cup has a bottom 411 and a circumferential side wall 412 upwardly extending from a periphery of the bottom.

Generally, the bottom and/or sidewall, such as a lower portion of the sidewall, may be coated, such as dry-coated, or otherwise prepared with one or more binding partners configured to react with one or more analytes present in a sample to be analyzed, when the sample is added to the sample cup. The material resulting from the reaction may be immobilized at the bottom and/or sidewall of the sample cup, where they may be detected by a suitable detection technique, such as based on electrical, optical or other suitable measurement technique. To this end, prior to the measurement, any unbound material and/or other waste material that might otherwise interfere with the measurement process, may need to be removed. To this end, the sample cup may be washed after the sample has been allowed to react with the binding partners in the sample cup.

In some embodiments, the analysis is based on immunoassays. The immunoassays may be based on a dry-chemistry concept and a detection method based on non-enhanced time-resolved fluorescence (TRF) technology. In this respect, the term dry-chemistry means that the required assay-specific reagents, e.g. including tracer antibody, capture antibody and stabilizing reagents, are dry-coated into one or more assay-specific sample cups 41. In one example, as schematically illustrated in FIG. 2B, each sample cup is coated with streptavidin 413. Biotinylated capture antibodies 414 may be immobilized at the cup surface through the binding between streptavidin and biotin. Streptavidin and biotin form a strong non-covalent biological interaction. An insulation layer 415 containing carbohydrates and all specific additives needed in the assay prevents any contact between capture and tracer antibodies. Europium-labeled tracer antibodies 416 may be added on top of the insulating layer.

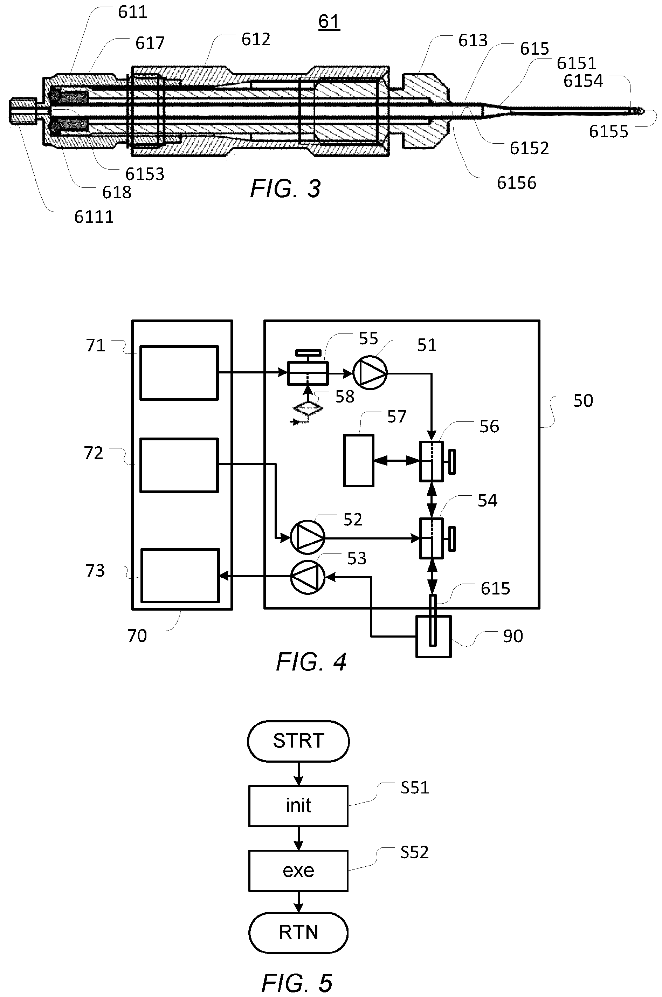

FIG. 3 shows a schematic view of a sample transfer needle assembly, generally designated by reference numeral 61. The sample transfer needle assembly 61 comprises an elongated sample transfer needle 615 that is disposed partly inserted within a needle holder 613. The needle holder 613 is disposed inside a circumferential bushing 612. The circumferential bushing 612 has attached to it a bushing end piece 611 that defines a fluid connection port 6111 for connecting a fluid line for fluidly connecting the needle assembly with the fluid handling assembly of an analyzer unit, e.g. of the analyzer unit of FIG. 1 or otherwise. The sample transfer needle 615 is secured to the needed holder 613, e.g. by welding. The bushing end piece 611 is threaded into the bushing 612 and secured by glue or otherwise. The sample transfer needle 615 has a rear end 6153 connected to the bushing end piece 611. The needle end piece 617 may be an annular element surrounding the rear part of the sample transfer needle 615. The needle end piece 617 may be welded to the sample transfer needle 615. The connection between the rear end of the sample transfer needle 615 and the bushing end piece 611 may be sealed by an O-ring 618. The sample transfer needle 615 further has a tip 6154 with an open pipetting end 6155. The needle 615 has a tubular inner lumen 6156 that extends between the rear end 6153 and the open pipetting end 6155. The lumen 6156 is surrounded by a circumferential wall 6152, which defines the lumen. The sample transfer needle 615 has a conical portion 6151 where the cross-sectional area of the lumen 6156 decreases towards the tip 6154 of the needle. In some embodiments, the sample transfer needle 615 is extruded in one piece, thereby avoiding rough edges when going from larger to smaller cross-sectional area of the lumen.

It will be appreciated that other embodiments of an analyzer unit may include other forms of sample transfer needle assemblies, e.g. needle assemblies that comprise alternative or additional parts, e.g. implementations without or with different forms of bushings, etc.

Generally, the sample transfer needle of various embodiments disclosed herein is made from a cobalt-enriched metal alloy, e.g. by a suitable extrusion process. As described above, in some embodiments, a needle assembly includes one or more parts in addition to the sample transfer needle, such as the needle holder 613, the needle end piece 617, the bushing 612 and/or the bushing end piece 611 of the example of FIG. 3. In such embodiments, one or more of these additional parts of the sample transfer assembly may also be made from a cobalt-enriched metal alloy, in particular from the same material as the sample transfer needle. In the example of FIG. 3, the sample transfer needle 615, the needle end piece 617 and the bushing end piece 611 are made from the same cobalt-enriched metal alloy. In the example of FIG. 3, the bushing 612 and the needle holder 613 may be made from another suitable material, such as a stainless steel.

The cobalt-enriched metal alloy may comprise between 20% and 50% cobalt, such as between 25% and 45% cobalt, such as between 25% and 40%, such as between 30% or 40%, or between 29% and 39% cobalt. In some embodiments, the cobalt-enriched metal alloy is a nickel-cobalt-chromium-molybdenum alloy, e.g. an alloy that comprises between 19% and 21% of chromium, between 33% and 37% of nickel and between 9% and 10.5% of molybdenum. In one embodiment, the nickel-cobalt-chromium-molybdenum alloy comprises: no more than 0.02% of Carbon, no more than 0.015% Phosphorous, no more than 0.15% of Silicon, no more than 0.15% of Manganese, no more than 0.010% of Sulfur, between 19% and 21% of Chromium, between 33% and 37% of Nickel, between 9% and 10.5% of Molybdenum, no more than 1% of Titanium, no more than 1% of Iron, the balance being Cobalt. Unless specified otherwise, the percentages of the constituents of the metal alloy specified herein refer to weight%. An example of a suitable the cobalt-enriched metal is MP35N^{®} available from Carpenter Technology, USA.

The cobalt-enriched metal alloy may comprise chromium and molybdenum at amounts that cause the metal alloy to have a pitting resistance equivalent number (PREN) of at least 40, such as at least 45, such as at least 50, such as between 50 and 57, thereby providing a high resistance to corrosion.

The circumferential wall 6152 has an inwardly facing tubular surface surrounding the lumen 6156. The inwardly facing tubular surface preferably has a high smoothness; it may have a Ra value between 0.1 µm and 0.3 µm. A smooth surface inside the needle helps prevent proteins from adhering to the surface. The smoothness of the metal alloy surface avoids the need for coating the inner needle surface, thereby providing a durable and easy to clean surface. Accordingly, in some embodiments, the inwardly facing tubular surface is an uncoated surface exposing said metal alloy to liquid passing through said lumen.

When a saline solution is used in the fluid handling assembly, e.g. as a buffer liquid as described herein, crevice corrosion between parts pf the needle assembly may occur. In particular, in the example of FIG. 3, crevice corrosion between the sample transfer needle end piece 617 and the bushing end piece 611 may occur and this can lead to increased carry-over. By using a cobalt-enriched metal alloy for the sample transfer needle and, preferably, for the bushing end piece 611, crevice corrosion can be eliminated.

The low surface roughness inside the needle lumen significantly helps improve the cleaning of the needle. By using the cobalt-enriched metal alloy it is possible to obtain a smooth surface roughness inside the needle and thus to make the needle wash process more efficient and reduce unspecific binding to the surface.

Use of the cobalt-enriched metal alloy further avoids the need for applying a coating to the needle. Accordingly, providing un uncoated, hard surface of the cobalt-enriched metal alloy, the durability of the sample transfer needle may be significantly increased.

FIG. 4 shows a schematic block diagram of a portion of an embodiment of an analyser unit, e.g. of the analyser unit shown in FIG. 1. In particular, FIG. 4 shows a more detailed view of the fluid handling assembly 50 and the liquid storage module 70.

The liquid storage module 70 comprises a buffer supply container 71, a rinse liquid supply container 72 and a waste collection container 73. For example, the liquid storage module 70 may be provided as a single replaceable module or as multiple, individually replaceable modules, or otherwise.

The fluid handling assembly 50 is fluidly connected via suitable fluid supply lines to the respective containers of the liquid storage module 70. The fluid handling assembly 50 is further fluidly connectable to the sample transfer needle 615 and to a needle wash unit 90. The fluid handling assembly comprises a buffer pump 51, a rinse liquid pump 52, a waste collection pump 53, a liquid selector valve 54, a mode selector valve 56, an air supply valve 55, an air filter 58 and a sample pipetting pump 57. The buffer pump 51, the rinse liquid pump 52 and the waste collection pump 53 may be peristaltic pumps driven by respective stepper motors or other suitable forms of pumps. The buffer pump 51 is operable to pump buffer liquid from the buffer container 71 towards the sample transfer needle 615. The rinse liquid pump 52 is operable to pump rinse liquid from the rinse liquid container 72 towards the sample transfer needle 615. The waste collection pump 53 is operable to pump waste liquid from the needle wash unit 90 to the waste collection container 73. The liquid selector valve 54 may be a solenoid valve or other suitable form of valve. The mode selector valve 56 may be a solenoid valve, a T-valve or another suitable form of valve. The mode selector valve 56 is operable to selectively fluidly connect either the sample pipetting pump 57 or the buffer pump 51 with the sample transfer needle 615, thereby allowing the switching between a sample transfer mode of operation and a needle wash mode of operation. The sample pipetting pump 57 may be a syringe pump or another suitable form of precision pump that can selectively aspire and dispense precise amounts of liquid. The liquid selector valve 54 is operable to selectively either allow rinse liquid to be pumped towards the sample transfer needle or buffer liquid to be pumped towards the sample transfer needle. The air supply valve 55 is operable to selectively add filtered air to the buffer liquid flow towards the sample transfer needle 615, e.g. so as to create air pulses or bubbles in the buffer liquid fed through the sample transfer needle. To this end, an air inlet of the air supply valve 55 is connected to an air filter 58. Alternatively or additionally, the fluid handling assembly may include a valve for adding air to the rinse liquid.

The fluid handling assembly 50 may be configured to perform a variety of tasks, including a needle wash process and the aspiration of a sample into the sample transfer needle and subsequent dispensing of the sample from the sample transfer needle into a sample receptacle. It will be appreciated that other embodiments of the fluid handling assembly may include alternative or additional components to perform the aspiration and needle wash operations. Additionally, the fluid handling assembly may also be configured to perform a cup wash operation for washing the sample cup or other sample receptacle that is employed for processing a blood sample to be analysed, and/or to perform other tasks involving fluid handling. Hence, it will generally be appreciated that embodiments of a fluid handling assembly may include additional or alternative components, such as additional valves, pumps, sensors, air traps, safety valves to avoid spillage of the rinse liquid, etc.

In preparation of a sample analysis, the sample transfer needle 615 is used to aspire an aliquot of a received blood sample and transfer the aliquot to a sample receptacle, e.g. as described above. To this end, the fluid handling assembly 50 comprises a sample pipetting pump 57 that is fluidly connected to the sample transfer needle 615, in this example via mode selector valve 56 and liquid selector valve 54. Accordingly, when aspiring a sample, the fluid handling assembly 50 operates mode selector valve 56 and the liquid selector valve 54 to fluidly connect the sample pipetting pump 57 with the sample transfer needle 615. It will be appreciated that, during aspiration and sample transfer, the sample transfer needle 615 is not placed in the needle wash unit 90 as shown in FIG. 4, but the sample transfer needle 615 is positioned relative to the received sample and the sample receptacle instead (not shown in FIG. 4).

Between the analysis of consecutive samples, the apparatus places the sample transfer needle 615 in a needle wash unit 90 and performs a needle wash process. To this end, the fluid handling assembly 50 operates mode selector valve 56 to fluidly connect the buffer pump 51 with the liquid selector valve 54. The fluid handling assembly 50 further operates the fluid selector valve 54 and pumps 51 and 52 to selectively cause buffer or rinse liquid, optionally with added filtered air, to be fed through the lumen of the sample transfer needle.

In particular, the fluid handling assembly 50 is operable to selectively feed buffer liquid from the buffer container 71 and rinse liquid from the rinse liquid container 72 through the lumen of the sample transfer needle 615, while the sample transfer needle is positioned in the needle wash unit 90. The spent liquid that has been fed through the sample transfer needle is collected by the needle wash unit 90 and pumped by waste collection pump 53 into the waste collection container 73.

When feeding buffer liquid from buffer container 71 through the sample transfer needle 615, the fluid handling assembly 50 operates the buffer pump 51 to pump the buffer liquid, optionally with air added by air supply valve 55, via mode selector valve 56 and via liquid selector valve 54 through the lumen of the sample transfer needle 615. To this end, the fluid handling assembly 50 operates the liquid selector valve 54 and the mode selector valve 56 to fluidly connect the buffer pump 51 with the sample transfer needle 615.

When feeding rinse liquid from rinse liquid container 72 through the sample transfer needle 615, the fluid handling assembly 50 operates rinse liquid pump 52 to pump the rinse liquid via liquid selector valve 54 through the lumen of the sample transfer needle 615. To this end, the fluid handling assembly 50 operates the liquid selector valve 54 to fluidly connect the rinse liquid pump 52 with the sample transfer needle 615. Accordingly, the rinse liquid and the buffer liquid only share a small part of the conduits, namely the part between the liquid selector valve 54 and the sample transfer needle 615.

The needle wash unit 90 may comprise an elongated blind hole, into which the sample transfer needle is downwardly inserted with the open pipetting end pointing downwards for washing. The liquid fed through the sample transfer needle during the wash process thus leaves the sample transfer needle at the bottom of the blind hole and rises along the outside of the sample transfer needle, thereby also cleaning the outer surfaces of the sample transfer needle that get into contact with the samples during the analysis process. The wash unit further comprises a drain for collecting overflow liquid that flows out of the blind hole at the upper end of the blind hole.

As will be described in greater detail below, embodiments of the needle wash process may comprise multiple wash cycles, including one or more cycles where rinse liquid is fed through the lumen of the sample transfer needle and including one or more cycles where buffer liquid is fed through the lumen of the sample transfer needle. To this end, the fluid handling assembly 50 operates liquid selector valve 54 so as to select the appropriate liquid for the respective wash cycles. Similarly, at least some wash cycles may involve the addition of filtered air to the fluid stream fed through the lumen sample transfer needle. Accordingly, the fluid handling assembly 50 may operate air supply valve 55 so as to selectively add filtered air to the fluid flow during at least parts of the wash operation.

In some embodiments, the fluid handling assembly may be configured to apply suction to the lumen of the sample transfer needle during one or more of the wash cycles, e.g. by reversing one of the pumps 51 or 52, or otherwise.

Generally, the buffer liquid may be used by the apparatus during the sample analysis as well as for washing the sample transfer needle in preparation for the analysis of the next sample. The buffer liquid may generally be a buffered saline solution, which may comprise one or more additional components, e.g. at least one chemical buffer, at least one wetting agent, at least one detergent and at least one antimicrobial.

Generally, it is desirable that the buffer liquid is stable at room temperature for an extended period of time, preferably for more than a year to allow easy storage for the user, is stable at elevated temperatures for a reasonable time, e.g. for more than a month to allow long onboard usage, shows commutability with patient samples, and is compatible with various, preferably all, assays used in combination with the analyser. Accordingly, in some embodiments, the buffer liquid may be capable of dissolving the cup content and stabilize the formation of the antibody-antigen-antibody "sandwich" complex.

In one particular example, the buffer liquid is a buffered saline solution having pH 7.0-7.5.

In some embodiments, the buffer liquid comprises HEPES, or alternatively Imidazole and/or MOPS in order to provide a buffering capacity comparable to that of whole blood. The surface tension of the buffer liquid may be lowered using detergents such as Tween 20, or alternatively Brij-35 and/or a wetting agent like Dynol 604. The ionic strength of the buffer liquid may be set to 14 - 17 mS/cm³, e.g. using a combination of sodium chloride, calcium chloride and Na₂EDTA. Preservation of the buffer liquid may be ensured by using Propyl-p-hydroxybenzoate Sodium salt, Germal II, Neolone 950 (ProClin950), or any combination thereof. An example of a suitable buffer liquid suitable for sample processing as well as for washing of the sample receptacle and/or the sample transfer needle is disclosed in international patent application PCT/EP2024/067713, the entire contents of which are hereby included herein by reference. The inventors have realized that the provision of the sample transfer needle from a cobalt-enriched metal, in particular from a metal alloy having a high PREN, provides a sufficient resistance against corrosion despite the exposure of the metal to the saline buffer liquid, i.e. despite the absence of a protective coating on the circumferential surface that defines the needle lumen.

In order to reduce the risk of carry-over contamination of the samples to be analysed, it is preferred that the needle wash process for cleaning the sample transfer needle between samples utilizes a rinse liquid different from the buffer liquid, in particular an alkaline rinse liquid that efficiently removes undesired sample residues from the needle lumen. Nevertheless, it is preferred that the wash process also utilizes the buffer liquid, e.g. at least during a final wash cycle, so as to rinse the needle lumen from the rinse liquid.

Preferably, the rinse liquid has a pH above 11, such as between 11 and 13, preferably between 11.5 and 12.5. The rinse liquid may comprise one or more wetting agent(s) and one or more detergent(s), preferably at least one ionic detergent and at least one nonionic detergent.

One example of the rinse liquid is an aqueous solution comprising
- A hydroxide compound, such as NaOH and/or LiOH, e.g. 2 g/kg water
- A wetting agent, such as Dynol 604, e.g. 0.1 g/kg water
- One or more Non-ionic detergent, such as Brij 35
- (pure compound), e.g. 2.1 g/kg water
- One or more organic detergent, such as Sodium dodecyl sulfate (SDS), e.g. 3.0 g/kg water.

The hydroxide compound, e.g. NaOH or LiOH provides an efficient breaking of protein bindings, while the non-ionic and/or organic detergents provide efficient removal of proteins and lipids.

FIG. 5 shows a flow diagram of an example of a needle wash process performed by an embodiment of an analyser unit, e.g. by the analyser unit of FIG. 1.

The needle wash process generally serves to wash away any residual sample material that may still be present in the lumen of the sample transfer needle prior to the processing of a subsequent sample. The washing is performed by pumping liquid through the lumen of the sample transfer needle.

A thorough and consistent washing of the sample transfer needle is important for obtaining an accurate and reproducible measurement of the subsequent sample. Nevertheless, it is also desirable to keep the time required for the needle wash process as short as possible and to use as small amounts of the required liquids as possible. The process is preferably optimized so as to remove residual material efficiently and effectively.

In step S51, the process positions the sample transfer needle at least partly inside a needle wash unit. The needle wash unit may provide a receptacle for collecting spent liquid after the liquid has been fed through the lumen of the sample transfer needle.

In step S52, the process executes one or more wash cycles. Preferred embodiments of the needle wash process for cleaning the sample transfer needle between samples include a plurality of wash cycles. Preferably, one or more wash cycles employ rinse liquid while one or more other wash cycles employ buffer liquid.

The wash cycles employing the rinse liquid may include one or more of cycles selected from the following cycles:
- a rinse cycle, where rinse liquid is fed through the needle lumen from the rear end to the pipetting end,
- a soak cycle, where rinse liquid is allowed to remain stationary inside the needle lumen for a predetermined soak time, e.g. between 1 s and 30 s, such as between 5 s and 25 s, such as between 10 s and 20 s, thereby allowing remaining residual sample material to dissolve,
- a bubble cycle, where air is intermittently added to the liquid flow, so as to create a pulsating fluid flow of alternating liquid and air flow segments, thereby facilitating loosening any remaining sample residue.
- a reciprocating cycle, where rinse liquid is alternatively fed through the needle lumen from the rear end to the pipetting end and from the pipetting end to the rear end. For example, the alternating flow may be caused by alternatingly pumping and applying suction, The reciprocating flow of the rinse liquid helps loosening any remaining sample residue.

In one embodiment, the needle wash process includes one or more of each of the above cycles or only a subset of these cycles. For example, in some embodiments, the wash process comprises either a bubble cycle or a reciprocating cycle. In one embodiment, the wash process comprises a flush or rinse cycle followed by a soak cycle and a reciprocating cycle, followed again by a flush or rinse cycle. In another embodiment, the wash process comprises a flush or rinse cycle followed by a soak cycle and a bubble cycle, followed again by a flush or rinse cycle. In alternative embodiments, the order of the wash cycles may be changed. In some embodiments one or more of the wash cycle ae performed more than once, e.g. by repeatedly performing soak and/or bubble cycles and/or by repeatedly performing rinse and soak cycles and/or the like.

In some embodiments, after the cleaning with rinse liquid, the process may perform a final flush cycle where the needle is flushed thoroughly with buffer liquid, e.g. at various flow speeds.

One example of a wash process comprises the following sequence of wash cycles:
- Step 1: Rinse liquid flush
   ∘ 1A: Flush with rinse liquid then wait for a predetermined waiting period
   ∘ 1B: Flush with rinse liquid then wait for a predetermined waiting period
   ∘ 1C: Flush with rinse liquid and check that liquid is present in the wash unit. To this end, the wash unit may include a conductivity sensor to detect liquid having passed through the needle.
   ∘ 1D: Wait for a predetermined waiting period.
- Step 2: Flush with buffer liquid through the needle
- Step 3: Create bubbles and flush them through the needle.
- Step 4: Perform liquid check on the buffer liquid to ensure correct conductivity and that liquid is present in the wash unit.

It will be appreciated that other embodiments of an analyzer unit may include a different type of analyte sensor or be configured to perform the measurement of the analyte concentration in a different manner.

At least some aspects disclosed herein may be summarized by the following embodiments:
Embodiment 1: An apparatus for measuring an amount of analyte in a biological sample, the apparatus comprising a pipetting unit for transferring an aliquot of a received biological sample into a sample receptacle for analysis of the aliquot of the received biological sample, wherein the pipetting unit comprises a sample transfer needle, the needle comprising a circumferential wall, the circumferential wall defining an elongated lumen surrounded by the circumferential wall,
   wherein at least a part of the circumferential wall is made from a metal alloy comprising between 20% and 50% cobalt, such as between 29-39% of cobalt.
Embodiment 2: The apparatus according to embodiment 1, wherein the metal alloy further comprises chromium, nickel and molybdenum.
Embodiment 3: The apparatus according to any one of the preceding embodiments, wherein the metal alloy comprises less than 2% Fe, such as less than 1% Fe, or only trace amounts of Fe.
Embodiment 4: The apparatus according to any one of the preceding embodiments, wherein the metal alloy has pitting resistance equivalent number of at least 40, such as at least 45, such as at least 50, such as between 50 and 57.
Embodiment 5: The apparatus according to any one of the preceding embodiments, wherein the circumferential wall has an inwardly facing tubular surface surrounding the lumen, the surface having a Ra value of between 0.1 µm and 0.3 µm.
Embodiment 6: An apparatus for measuring an amount of analyte in a biological sample, the apparatus comprising a pipetting unit for transferring an aliquot of a received biological sample into a sample receptacle for analysis of the aliquot of the received biological sample, wherein the pipetting unit comprises a tubular sample transfer needle, the needle comprising a circumferential wall, the circumferential wall defining an elongated lumen surrounded by the circumferential wall,
   wherein at least a part of the circumferential wall is made from a metal alloy and has an inwardly facing tubular surface surrounding the lumen, the surface exposing the metal alloy and having a Ra value of between 0.1 µm and 0.3 µm.
Embodiment 7: The apparatus according to embodiment 5 or 6; wherein the inwardly facing tubular surface is an uncoated surface exposing said metal alloy to liquid passing through said lumen.
Embodiment 8: The apparatus according to any one of the preceding embodiments, comprising a fluid handling assembly configured to feed a rinse liquid through said lumen.
Embodiment 9: The apparatus according to embodiment 8, wherein the rinse liquid has a pH above 11, such as between 11 and 13, preferably between 11.5 and 12.5.
Embodiment 10: The apparatus according to any one of embodiments 8 through 9, wherein the rinse liquid further comprises one or more wetting agent(s) and one or more detergent(s), preferably at least one ionic detergent and at least one nonionic detergent.
Embodiment 11: The apparatus according to any one of embodiments 8 through 10, wherein the fluid handling assembly is further configured to dispense a buffer liquid, different from the rinse liquid, into the sample receptacle.
Embodiment 12: The apparatus according to embodiment 11, wherein the buffer liquid comprises a saline solution.
Embodiment 13: The apparatus according to embodiment 12, wherein the buffer liquid further comprises at least one chemical buffer, at least one wetting agent, at least one detergent and at least one antimicrobial.
Embodiment 14: The apparatus according to any one of embodiments 11 through 13, wherein the fluid handling assembly is configured to selectively, in particular alternatingly, feed the rinse liquid and the buffer liquid trough the lumen.
Embodiment 15: The apparatus according to embodiment 14, wherein the sample transfer needle has a pipetting end and a rear end, opposite the pipetting end, and wherein the fluid handling assembly is in fluid communication with the rear end and comprises a liquid selector valve for selectively feeding rinse liquid or buffer liquid through the lumen.
Embodiment 16: The apparatus according to any one of embodiments 8 through 15, wherein the fluid handling assembly is configured to perform one or more wash cycles after each analysis of a biological sample.
Embodiment 17: The apparatus according to any one of embodiments 11 through 16, wherein the fluid handling assembly is configured to perform a sequence of wash cycles, the sequence comprising one or more pre-rinse cycles followed by one or more rinse cycles, wherein the fluid handling assembly is configured, during at least one of the one or more pre-rinse cycles, to feed buffer liquid through the lumen, and wherein the fluid handling assembly is configured, during at least one of the one or more rinse cycles, to feed rinse liquid through the lumen.
Embodiment 18: The apparatus according to any one of embodiments 11 through 17, wherein the fluid handling assembly is configured to perform a sequence of wash cycles, the sequence comprising one or more rinse cycles followed by one or more flush cycles, wherein the fluid handling assembly is configured, during at least one of the one or more rinse cycles, to feed rinse liquid through the lumen, and wherein the fluid handling assembly is configured, during at least one of the one or more flush cycles, to feed buffer liquid through the lumen.
Embodiment 19: The apparatus according to any one of the preceding embodiments, wherein the sample receptacle includes one or more binding partners of the analyte so that the analyte present in the biological sample is allowed to interact with the one or more binding partners.
Embodiment 20: A method of operating an apparatus as defined in any one of the preceding embodiments, the method comprising feeding a rinse liquid through said lumen.
Embodiment 21: The method according to embodiment 20, wherein the rinse liquid has a pH above 11, such as between 11 and 13, preferably between 11.5 and 12.5.
Embodiment 22: The method according to any one of embodiments 20 through 21, wherein the rinse liquid further comprises one or more wetting agent(s) and one or more detergent(s), preferably at least one ionic detergent and at least one nonionic detergent.
Embodiment 23: The method according to any one of embodiments 20 through 22, further comprising dispensing a buffer liquid, different from the rinse liquid, into the sample receptacle.
Embodiment 24: The method according to embodiment 23, wherein the buffer liquid comprises a saline solution.
Embodiment 25: The method according to embodiment 24, wherein the buffer liquid further comprises at least one chemical buffer, at least one wetting agent, at least one detergent and at least one antimicrobial.
Embodiment 26: The method according to any one of embodiments 23 through 25, comprising selectively, in particular alternatingly, feeding the rinse liquid and the buffer liquid through the lumen.
Embodiment 27: The method according to any one of embodiments 20 through 26, comprising performing one or more wash cycles after each analysis of a biological sample.
Embodiment 28: The method according to any one of embodiments 23 through 27, comprising performing a sequence of wash cycles, the sequence comprising one or more pre-rinse cycles followed by one or more rinse cycles, and wherein the method comprises:
   - during at least one of the one or more pre-rinse cycles, feeding buffer liquid through the lumen, and,
   - during at least one of the one or more rinse cycles, feeding rinse liquid through the lumen.
Embodiment 29: The method according to any one of embodiments 23 through 28, comprising performing a sequence of wash cycles, the sequence comprising one or more rinse cycles followed by one or more flush cycles, wherein the method comprises:
   - during at least one of the one or more rinse cycles, feeding rinse liquid through the lumen, and
   - during at least one of the one or more flush cycles, feeding buffer liquid through the lumen.
Embodiments of at least some steps of the method described herein may be computer-implemented or computer-controlled. In particular, embodiments of at least some steps of the method may be implemented by means of hardware comprising several distinct elements, and/or at least in part by means of a suitably programmed microprocessor. In the apparatus claims enumerating several means, several of these means can be embodied by one and the same element, component or item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, elements, steps or components but does not preclude the presence or addition of one or more other features, elements, steps, components or groups thereof.

## Claims

1. An apparatus for measuring an amount of analyte in a biological sample, the apparatus comprising a pipetting unit for transferring an aliquot of a received biological sample into a sample receptacle for analysis of the aliquot of the received biological sample, wherein the pipetting unit comprises a sample transfer needle, the needle comprising a circumferential wall, the circumferential wall defining an elongated lumen surrounded by the circumferential wall,
wherein at least a part of the circumferential wall is made from a metal alloy comprising between 20% and 50% cobalt, such as between 25% and 45% of cobalt, such as between 30% and 40% of cobalt or between 29% and 39% of cobalt.

2. The apparatus according to claim 1, wherein the metal alloy further comprises chromium, nickel and molybdenum.

3. The apparatus according to any one of the preceding claims, wherein the metal alloy comprises less than 2% Fe, such as less than 1% Fe, or only trace amounts of Fe.

4. The apparatus according to any one of the preceding claims, wherein the metal alloy has pitting resistance equivalent number of at least 40, such as at least 45, such as at least 50, such as between 50 and 57.

5. The apparatus according to any one of the preceding claims, wherein the circumferential wall has an inwardly facing tubular surface surrounding the lumen, the surface having a Ra value of between 0.1 µm and 0.3 µm .

6. An apparatus for measuring an amount of analyte in a biological sample, the apparatus comprising a pipetting unit for transferring an aliquot of a received biological sample into a sample receptacle for analysis of the aliquot of the received biological sample, wherein the pipetting unit comprises a tubular sample transfer needle, the needle comprising a circumferential wall, the circumferential wall defining an elongated lumen surrounded by the circumferential wall,
wherein at least a part of the circumferential wall is made from a metal alloy and has an inwardly facing tubular surface surrounding the lumen, the surface exposing the metal alloy and having a Ra value of between 0.1 µm and 0.3 µm.

7. The apparatus according to claim 5 or 6; wherein the inwardly facing tubular surface is an uncoated surface exposing said metal alloy to liquid passing through said lumen.

8. The apparatus according to any one of the preceding claims, comprising a fluid handling assembly configured to feed a rinse liquid through said lumen.

9. The apparatus according to claim 8, wherein the rinse liquid has a pH above 11, such as between 11 and 13, preferably between 11.5 and 12.5.

10. The apparatus according to any one of claims 8 through 9, wherein the rinse liquid further comprises one or more wetting agent(s) and one or more detergent(s), preferably at least one ionic detergent and at least one nonionic detergent.

11. The apparatus according to any one of claims 8 through 10, wherein the fluid handling assembly is further configured to dispense a buffer liquid, different from the rinse liquid, into the sample receptacle.

12. The apparatus according to claim 11, wherein the buffer liquid comprises a saline solution, optionally further comprising at least one chemical buffer and/or at least one wetting agent and/or at least one detergent and at least one antimicrobial.

13. The apparatus according to any one of claims 11 through 12, wherein the fluid handling assembly is configured to selectively, in particular alternatingly, feed the rinse liquid and the buffer liquid trough the lumen.

14. The apparatus according to claim 13, wherein the sample transfer needle has a pipetting end and a rear end, opposite the pipetting end, and wherein the fluid handling assembly is in fluid communication with the rear end and comprises a liquid selector valve for selectively feeding rinse liquid or buffer liquid through the lumen.

15. A method of operating an apparatus as defined in any one of the preceding claims, the method comprising feeding a rinse liquid through said lumen.
